Europäisches Patentamt

European Patent Office

Office européen des brevets

(11) Publication number: **0 168 237**
**B1**

# (12) EUROPEAN PATENT SPECIFICATION

(45) Date of publication of patent specification: **27.12.90**

(21) Application number: **85304859.3**

(22) Date of filing: **08.07.85**

(51) Int. Cl.⁵: **F 16 J 9/00**

(54) Piston and cylinder apparatus.

(30) Priority: **07.07.84 GB 8417395**

(43) Date of publication of application:
**15.01.86 Bulletin 86/03**

(45) Publication of the grant of the patent:
**27.12.90 Bulletin 90/52**

(84) Designated Contracting States:
**BE DE FR IT NL SE**

(56) References cited:
**CA-A- 882 531**
**GB-A-1 396 230**
**GB-A-1 424 854**
**GB-A-1 549 970**
**GB-A-1 559 571**
**US-A-3 921 988**

(73) Proprietor: **BENDIX LIMITED**
**Douglas Road**
**Kingswood, Bristol BS15 2NL (GB)**

(72) Inventor: **Neal, Brian P.**
**1 Woodcote Mount Hill**
**Kingswood Bristol (GB)**

(74) Representative: **Turner, Alan Reginald**
**c/o Bendix Limited Douglas Road**
**Kingswood, Bristol BS15 2NL (GB)**

Courier Press, Leamington Spa, England.

## Description

This invention relates to piston and cylinder apparatus and relates especially but not exclusively to air compressors wherein a piston is intended to operate in a cylinder without added lubrication.

The most commonly used air compressors for charging reservoirs in compressed air systems such as installed on vehicles for braking and other functions employ conventional metallic pistons reciprocably slideable in cast iron or aluminium cylinder bores and they require a suitable lubricating oil supply. Such compressors are usually driven by the vehicle engine and also receive their lubricating oil supply from the engine. There is, therefore, an inherent practical constraint placed upon the positioning of the compressor on the vehicle.

Additionally, such compressors tend to permit carry-over of oil vapour or droplets with the compressed air into the compressed air system and precautions such as filters and drain valves are essential to prevent such oil reaching sensitive working parts of the system. Such filters tend to become blocked and therefore require frequent replacement.

Various proposals have been made to construct substantially "oil-free" or dry-run piston and cylinder compressors the bearings of which have sealed-in lubrication. One proposal for a construction of such a dry-run compressor with pistons pivotally connected to their connecting rods is to be seen in United Kingdom Patent Specification No. 1549970 but the piston construction is not dealt with.

One construction of a piston in a reciprocating dry-run machine, albeit with a fixed piston rod, is disclosed in the Specification of United Kingdom Patent No. 1396230. A sleeve of P.T.F.E. is shrink-fitted on the skirt of a metal piston core, the sleeve provides a labyrinth construction and the dimensions are such that at lower temperatures there is sealing clearance between the bore and the sleeve which because of side thrust is less acceptable with a piston pivoted to its connecting rod. The present invention therefore seeks to provde such an apparatus wherein even at lower temperatures there is substantially no such clearance and therefore improved efficiency of operation.

According to the present invention there is provided a piston and cylinder apparatus including a cylinder having a bore of a first material and an elongated piston pivotally connected to a connecting rod the piston having a substantially non-deformable core with a crown facing a cylinder head and a skirt extending axially away therefrom and said piston carrying peripheral bearing and sealing means characterised by said bearing means comprising first and second bearing surface portions respectively at or near the axial extremities of the piston crown and the skirt said portions being formed of a moulded material offering sliding wear resistance compatible with the material of the cylinder bore said first bearing surface portion being formed in one piece with and axially spaced from a radially outwardly projecting lip portion which is of apparently greater diameter than the cylinder bore and which upon insertion of the piston into the bore is resiliently bent in a direction towards the cylinder head to effect sealing and sliding engagement with the cylinder bore.

In one embodiment said bearing or wear means extends as a moulded sleeve over the full length of the skirt of the piston core and is provided with an inner bead locatable with the piston core.

The moulded sleeve may also be closed at one end so as to enclose the head of the piston core.

In an alternative embodiment, said bearing or wear sleeve may be located by a circumferential groove of the piston.

In order that the invention may be more clearly understood and readily carried into effect the same will be further described by way of example with reference to the accompanying drawings of which:

Fig. 1 (a) illustrates one example in part-sectional diagrammatic view,

Fig. 1 (b) illustrates in its free state a moulded piston sleeve used in the apparatus of Fig. 1.

Fig. 1 (c) is a further view of the moulded sleeve taken on the direction of the arrow 'A' and,

Figs. 2 and 3 illustrate alternative embodiments.

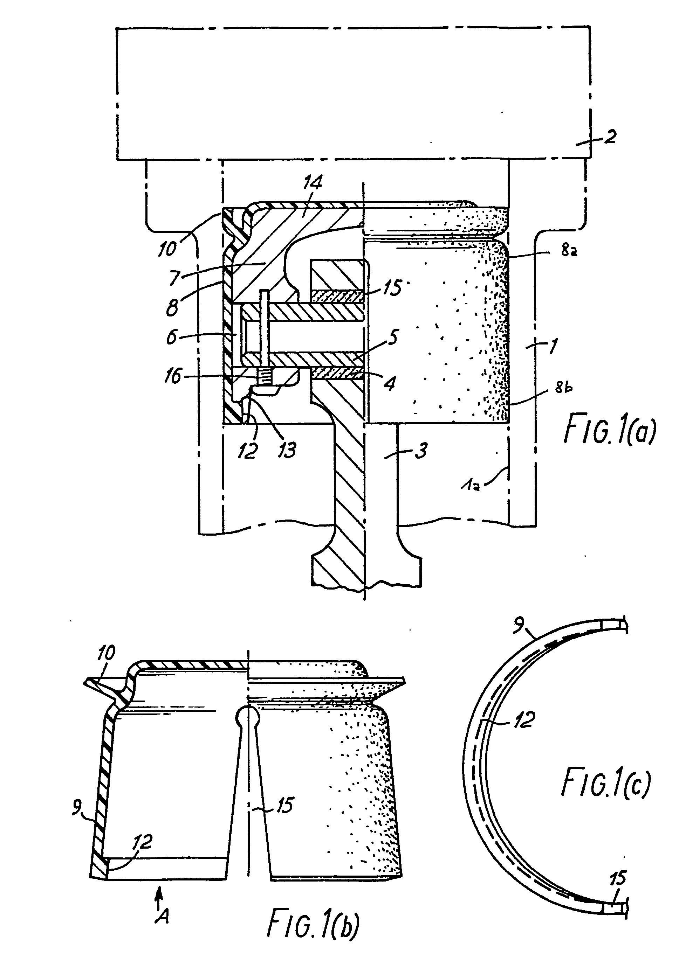

Referring to the part-sectional view of the portion of a single cylinder air compressor, as shown in Fig. 1 of the drawing, the cylinder is denoted by reference 1 having a bore 1a of a first material and a cylinder head and valve-plate assembly which is normally bolted on is represented by the block 2. The gudgeon pin end of a connecting rod 3 is provided with a sealed-in needle roller bearing 4 and a gudgeon pin 5 with end pads, one of which is shown at 6. The gudgeon pin 5 is retained in an aluminium piston core 7 by means of locked-in set screws 16. The piston core 7 is provided with a moulded polytetrafluorethylen cup-shaped bearing and sealing means, in the form of a sleeve 8, before insertion into the aluminium bore of cylinder 1. The natural moulded form of sleeve 8 is as shown at 9 in Fig. 1 (b) of the drawings. The lower edge of the skirt thereof carries an inwardly projecting bead 12 of thickness which varies as shown in Fig. 1 (c) and which when deflected inwards engages a rebate at the lower edge of the skirt 13 of the piston inner core 7. To permit such inward deflection the skirt of the cup-shaped sleeve has axial slots such as 15 extending upwards to a point somewhat below the root of the sealing part 10. Surrounding a crown-portion 14 of the piston core, which is of smaller diameter than the main part of the piston skirt, there is resiliently deformable annular compression lip seal portion 10, the undeformed shape of which is shown in Fig. 1 (b). In order to insert the thus assembled piston in the cylinder bore, the skirt 9 of the sleeve 8 and the annular lip seal part 10 are compressed inwardly to reduce their diameters to fit the cylinder bore. The inwardly projecting bead 12 is thus brought into engagement with a lower edge rebate of the skirt 13 of the piston core thereby retaining the sleeve 8 and the piston core together in operation. The sleeve 8 thereby provides sliding bearing surface portions 8a, 8b for the aluminium piston in the cylinder bore at or near the axial extremities of the head and the skirt. The integrally moulded lip-seal portion 10 being of appreciably greater diameter than the cylinder bore is resiliently bent in a direction towards the cylinder head to effect sealing and sliding engagement with the cylinder bore whilst being spaced from the adjacent first bearing surface portion of the sleeve 8.

As an alternative to the bead 12 engaging with the lower edge of the piston core, lugs may be provided within sleeve 8, to locate in the transverse gudgeon pin recesses of the piston core 7, to retain the sleeve in position on the core.

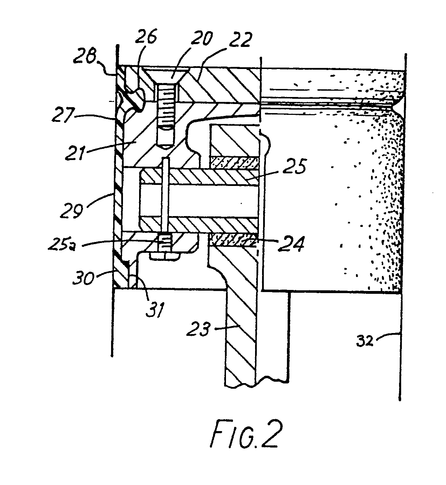

Referring to Fig. 2, wherein in a bore 32 an alternative piston construction is shown. The gudgeon pin end of a connecting rod 23 is provided with a sealed bearing or bush 24 and the gudgeon pin 25 is again located in the core of the piston by a small locked locating set-screw 25a with a shank passing through holes in the gudgeon pin. The piston core is formed on a lower skirt part 21 between which and an upper head part 22 there is clamped, by screws 20 , an inwardly projecting annular retaining bead 26 of a carbon-filled polytetrafluorethylene bearing sleeve. The bearing sleeve 27 has a resilently deformable seal bead 28 similar to the seal bead 10 of Fig. 1 and a similarly slotted skirt portion 29 with a lower inwardly projecting bead 30 locating in an annular rebate 31 formed in the lower edge of the piston core part 21.

In a variant of Fig. 2 the lower bead 30 may be dispensed with together with the mentioned slots. The skirt is then required simply to be press-fitted over the lower or skirt part 21 of the piston core before attachment of the upper or head part 22.

In yet another variant of the arrangement of Fig. 2 the mentioned holes in the gudgeon pin may be tapped with screw threads to receive the screws 20a which may then preferably have clearing fit in the lower part of the piston core.

In yet another variant, the lower part of the piston core may be cut away, in way of the gudgeon pin, permitting assembly of the gudgeon pin thereto from beneath to be retained in position by screws.

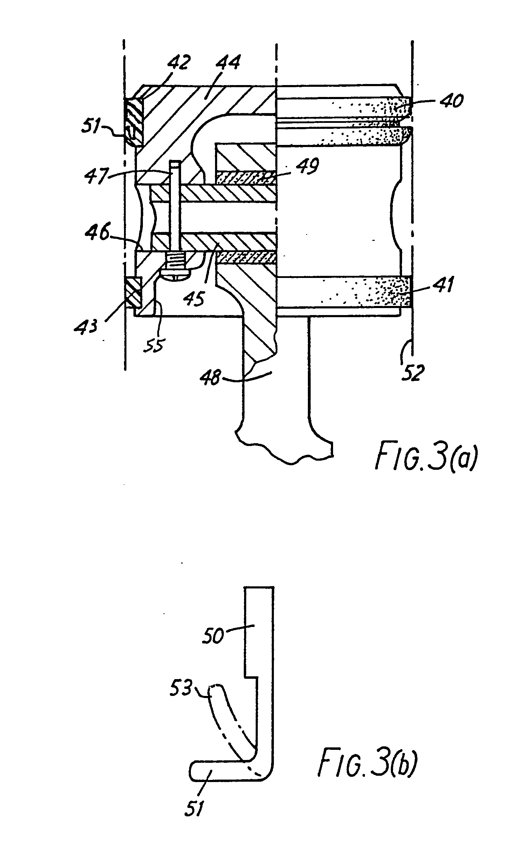

In a further variant on the arrangement shown in Fig. 1, the bearing sleeve 8 may be replaced, as shown in Fig. 3 (a) by bearing or wear means comprising upper and lower bearing or wear rings 40 and 41 located in respective grooves 42 and 43 formed in the main core of an aluminium air compressor piston having a head 44 and a skirt 55. As in the cases of Figs. 1 and 2, the gudgeon pin 45 is located in the transverse bore 46 of the piston by at least one retaining screw 47. The connecting rod 48 is pivotable on a sealed bush or bearing 49 as before.

The upper bearing or wear ring 40 is formed with a section generally as shown on an enlarged scale in Fig. 3 (b), from which it will be seen that this comprises an upper thicknened bearing-portion 50 and a lower resiliently deflectable portion 51 which extends radially upwards and is deflectable through a position such as shown dotted at 53 when the piston is inserted in an aluminium bore of a cylinder indicated by the broken lines 52 of Fig. 3 (a). Thus the resiliently deflectable seal portion is located to act against the cylinder bore 52 between respective bearing surfaces of 40 and 41 of the bearing or wear means.

The upper bearing or wear-ring 40 and the lower bearing or wear-ring 41 are manufactured by compression moulding or by machining from a suitable carbon-filled polytetrafluorethylene (P.T.F.E.) material but other suitable plastics material may be used. The dimensions of the bearings-rings and the depth of the upper and lower grooves 42 and 43 formed in the piston body 44 are such as to permit the bearing-rings 40 and 41 to be passed over the external diameter of the main body 44 to locate in the respective grooves.

The essential requirement for the bearing or wear-rings is that they both shall jointly operate to prevent contact between the piston body 44 and the interior of the cylinder bore 52 and that a sufficiently good degree of sealing is provided by the seal-portion 51 through the useful life of the compressor.

Whilst the piston core of each of the above described embodiments is preferably to be made of aluminium, other suitable substantially non-deformable materials may be used. In the case of suitable plastics material being used the advantages of injection or compression moulding may be enjoyed. Moreover, although the bearing or wear rings or sleeves are made of polytetrafluorthylene, other materials such as polyetheretherketone may be employed.

## Claims

1. A piston and cylinder apparatus including a cylinder (1) having a bore (1a; 32; 52) of a first material and an elongated piston pivotally connected to a connecting rod (3; 23; 48) the piston having a substantially non-deformable core with a crown (14; 22; 44) facing a cylinder head (2) and a skirt (13; 21; 55) extending axially away therefrom and said piston carrying peripheral bearing and sealing means (8; 27; 42, 43) characterised by said bearing means comprising first and second bearing surface portions (8a, 8b) respectively at or near the axial extremities of the piston crown and the skirt said portions being formed of a moulded material offering sliding wear resistance compatible with the material of the cylinder bore (1a; 52) said first bearing surface portion being formed in one piece with and axially spaced from a radially outwardly projecting lip (10; 28; 51) portion which is of appreciably greater diameter than the cylinder bore and which upon insertion of the piston into the bore is resiliently bent in a direction towards the cylinder head to effect sealing and sliding engagement with the cylinder bore.

2. Apparatus as claimed in claim 1, characterised by said piston crown being of smaller diameter than the remainder of the piston to accommodate said lip portion when inserted in the cylinder bore.

3. Apparatus as claimed in claim 1 or 2 characterised by each said bearing and seal means being provided by a sleeve (8; 29) extending over substantially the full length of the piston core.

4. Apparatus as claimed in claim 3 characterised by said sleeve (8) being provided with an inward projection (12; 26) located by the piston core.

5. Apparatus as claimed in claim 1, 2, 3 or 4 characterised by said sleeve (8) being closed at one end to enclose the crown (14) of the piston core.

6. Apparatus as claimed in claim 2, 3, 4 or 5 characterised by said sleeve (8) being provided with at least one axial slot (15) permitting fitting thereof over the piston core prior to insertion into the cylinder.

7. Apparatus as claimed in claim 1 characterised by said bearing surface portions being surface portion of separate parts of the bearing and sealing means located in respective grooves (42 and 43) of the piston core.

8. Apparatus as claimed in any preceding claim characterised by said resiliently deflectable compression seal (51) being displaced axially from the crown to lie against the cylinder bore between the bearing means.

9. Apparatus as claimed in any preceding claim characterised by the piston being rotatably attached to a connecting rod (3; 23; 48) via a gudgeon pin located in the piston core of the piston by means of a member (16; 25a; 47) passing therethrough.

10. Apparatus as claimed in any preceding claim characterised by said bearing sleeve being formed of carbon-filled polytetrafluorethylene.

11. Apparatus as claimed in any preceding claim characterised by said sleeve being formed of polyetheretherketone material.

**Patentansprüche**

1. Apparat mit Kolben und Zylinder, umfassend einen Zylinder (1), der eine Bohrung (1a; 32; 52) hat und aus einem ersten Material besteht, und einen langgestreckten Kolben, der mit einer Verbindungsstange (3; 23; 48) schwenkbar verbunden ist und einen im wesentlichen nicht verformbaren Kern mit einer Krone (14; 22; 44), der dem Kopf (2) des Zylinders zugewandt ist, und einen Rand (13; 21; 55) hat, der sich axial von der Krone weg erstreckt, wobei der Kolben Umfangslager- und Dichtungsmittel (8; 27; 42, 43) trägt, dadurch gekennzeichnet, daß die Lagermittel einen ersten und einen zweiten Lagerflächenabschnitt (8a, 8b) an bzw. nahe dem axialen Ende der Kolbenkrone bzw. des Randes aufweisen, die Abschnitte aus einem geformten Material gebildet sind, welches einen Gleitabnutzungswiderstand darbietet, der mit dem Material der Zylinderbohrung (1a; 52) verträglich ist, der erste Lagerflächenabschnitt in einem Stück mit und in axialem Abstand von einem radial nach außen vorragenden Lippenteil (10; 28; 51) gebildet ist, der beträchtlich größeren Durchmesser als die Zylinderbohrung hat und der beim Einsetzen des Kolbens in die Bohrung in einer Richtung gegen den Zylinderkopf federnd gebogen wird, um Abdicht- un Gleiteingriff mit der Zylinderbohrung zu bewirken.

2. Apparat nach Anspruch 1, dadurch gekennzeichnet, daß die Kolbenkrone kleineren Durchmesser als der übrige Teil des Kolbens hat, um den Lippenteil beim Einsetzen in die Zylinderbohrung aufzunehmen.

3. Apparat nach Anspruch 1 oder 2, dadurch gekennzeichnet, daß die Lager- und Dichtungsmittel durch eine Hülse (8; 29) gebildet sind, die sich über im wesentlichen die vollständige Länge des Kolbenkerns erstreckt.

4. Apparat nach Anspruch 3, dadurch gekennzeichnet, daß die Hüse (8) mit einem Einwärtsvorsprung (12; 26) versehen ist, der durch den Kolbenkern lokalisiert ist.

5. Apparat nach Anspruch 3 oder 4, dadurch gekennzeichnet, daß die Hülse (8) an einem Ende geschlossen ist, um die Krone (14) des Kolbenkerns zu umschließen.

6. Apparat nach Anspruch 3, 4 oder 5, dadurch gekennzeichnet, daß die Hülse (8) mit wenigstens einem Axialschlitz (15) versehen ist, der ihr Anordnen über dem Kolbenkern vor dem Einsetzen in den Zylinder ermöglicht.

7. Apparat nach Anspruch 1, dadurch gekennzeichnet, daß die Lagerflächenabschnitte Flächenabschnitte von getrennten Teilen der Lager- und Dichtungsmittel sind, die in betreffenden Nuten (42 und 43) des Kolbenkerns angeordnet sind.

8. Apparat nach irgendeinem der vorhergehenden Ansprüche, dadurch gekennzeichnet, daß eine federnd ablenkbare Kompressionsdichtung (51) gegenüber der Krone axial verschoben ist, so daß sie zwischen den Lagermitteln gegen die Zylinderbohrung anliegt.

9. Apparat nach irgendeinem der vorhergehenden Ansprüche, dadurch gekennzeichnet, daß der Kolben drehbar an einer Verbindungsstange (3; 23; 48) angebracht ist über einen Drehzapfen, der in dem Kolbenkern mittels eines Teiles (16; 25a; 47) angeordnet ist, der durch ihn hindurchgeht.

10. Apparat nach irgendeinem der vorhergehenden Ansprüche, dadurch gekennzeichnet, daß die Lagerhülse aus mit Kohlenstoff gefülltem Polytetrafluoräthylen gebildet ist.

11. Apparat nach irgendeinem der vorhergehenden Ansprüche, dadurch gekennzeichnet, daß die Hülse aus Polyetheretherketon gebildet ist.

**Revendications**

1. Appareil à piston et cylindre comportant un cylindre (1) ayant un alésage (1a; 32; 52) en un premier matériau et un piston allongé monté à pivot sur une bielle (3; 23; 48) le piston ayant un noyau sensiblement non déformable avec une couronne (14; 22; 44) faisant face à la tête (2) du cylindre et une jupe (13; 21; 55) s'étendant dans une direction axiale en s'éloignant de la couronne, ledit piston portant des moyens périphériques formant palier et joint d'étanchéité (8; 27; 42; 43), caractérisé en ce que lesdits moyens formant palier comportent une première et une deuxième portion (8a, 8b) de surface de palier respectivement aux extrémités axiales de la couronne et de la jupe du piston ou au voisinage de celles-ci, lesdites portions étant formées en un matériau moulé présentant une résistance à l'usure due au glissement compatible avec le matériau de l'alésage du cylindre (1a; 52) ladite première portion de surface de palier étant formée d'une seule pièce avec une portion formant collerette (10; 28; 51) radialement en saillie vers l'extérieur et axialement écartée de celle-ci, cette collerette étant d'un diamètre sensiblement supérieur à celui de l'alésage du cylindre et, lors de l'insertion du piston à l'intérieur de l'alésage, étant soumise à une flexion élastique dirigée vers la tête du cylindre pour réaliser un engagement étanche et coulissant avec l'alésage du cylindre.

2. Appareil selon la revendication 1, caractérisé en ce que ladite couronne du piston est d'une diamètre inférieur à celui du reste du piston, pour loger ladite partie en collerette lorsqu'elle est insérée dans l'alésage du cylindre.

3. Appareil selon la revendication 1 ou 2, caractérisé en ce que chaque moyen formant palier et joint d'étanchéité est muni d'un manchon (8; 29) s'étendant sensiblement sur toute la longueur du noyau du piston.

4. Appareil selon la revendication 3, caractérisé en ce que ledit manchon (8) comporte une partie en saillie vers l'intérieur (12; 26), maintenue en position par le noyau du piston.

5. Appareil selon la revendications 3 ou 4, caractérisé en ce que ledit manchon (8) est fermé à une extrémité pour enfermer la couronne (14) du joyau du piston.

6. Appareil selon la revendication 3, 4 ou 5, caractérisé en ce que ledit manchon (8) comporte au moins une entaille axiale (15) permettant son ajustage au-dessus du noyau du piston avant l'insertion à l'intérieur du cylindre.

7. Appareil selon la revendication 1, caractérisé en ce que lesdites portions de surface de palier sont des portions de surface de parties séparées des moyens formant palier et joint d'étanchéité logées dans des encoches respectives (42 et 43) du noyau du piston.

8. Appareil selon l'une quelconque des revendications précédentes, caractérisé en ce que ledit joint déformable élastiquement par compression (51) est écarté axialement de la couronne pour venir porter sur l'alésage du cylindre entre les moyens formant palier.

9. Appareil selon l'une quelconque des revendications précédentes, caractérisé en ce que le piston est fixé rotatif sur une bielle (3; 23; 48) par l'intermédiaire d'un arbre de pied de bielle maintenu en position dans le noyau du piston au moyen d'un élément (16; 25a; 470 le traversant.

10. Appareil selon l'une quelconque des revendications précédentes, caractérisé en ce que ledit manchon de palier est constitué par du polytetrafluoréthylène à charge de carbone.

11. Appareil selon l'une quelconque des revendications précédentes, caractérisé en ce que ledit manchon est constitué par du "polyéthérétherkétone (PEEK)".

FIG.1(a)

FIG.1(b)

FIG.1(c)

FIG.2

42  44

51

47

49

46

43

45

55

48

40

41

52

*FIG.3(a)*

50

53

51

*FIG.3(b)*